# EUROPEAN PATENT SPECIFICATION

(11) **EP 4 657 664 B1**
(45) Date of publication and mention of the grant of the patent: **09.12.2026**
(21) Application number: 24178229.1
(22) Date of filing: 27.05.2024
(51) Int. Cl.: H01R 4/34, H01M 50/502, H01R 4/48, H01R 9/22

(54) **AN ARRANGEMENT FOR CONNECTING A BUSBAR TO AN ENERGY STORAGE SYSTEM OR A SECOND BUSBAR**
ANORDNUNG ZUM VERBINDEN EINER STROMSCHIENE MIT EINEM ENERGIESPEICHERSYSTEM ODER EINER ZWEITEN STROMSCHIENE
AGENCEMENT POUR CONNECTER UNE BARRE OMNIBUS À UN SYSTÈME DE STOCKAGE D'ÉNERGIE OU À UNE SECONDE BARRE OMNIBUS

(43) Date of publication of application: 03.12.2025
(73) Proprietor: VOLVO TRUCK CORPORATION, 405 08 Göteborg (SE)
(72) Inventor: IRANNEZHAD, Mike, 413 30 Göteborg (SE); SERRA DALMAU, Albert, 417 06 Göteborg (SE)
(74) Representative: Ström & Gulliksson AB

(56) References cited:
- US-A- 5 580 266
- US-A1- 2021 044 052
- US-A1- 20230 078 301
- US-B2- 9 017 099

## Description

### TECHNICAL FIELD

The disclosure relates generally to high voltage busbars. According to the invention, the disclosure relates to an arrangement for connecting a busbar to an energy storage system or a second busbar. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A busbar is a bar of metal intended to conduct electricity. They are commonly used to conduct high voltages over short distances, such as in a switchgear or a distribution board. Consisting of metal bars, busbars are stiff and do not compensate for different positions of or movement of the parts connected by the busbar. Movement of any of the connected parts could break the electrical contact, the parts or the busbar.

Document US 2023/078301 A1 discloses also an electrical arrangement with busbars.

### SUMMARY

According to the invention, an arrangement for connecting a first busbar to an energy storage system or a second busbar is provided. Wherein the arrangement comprises a housing and a pressing element. Wherein the first busbar comprises a first connector plate, to be connected to a connector surface of the energy storage system or second busbar; wherein the housing is arranged to house the connector surface; wherein said housing comprises a guiding slit for guiding the first connector plate along a plane parallel to the connector surface; and wherein the pressing element is configured to press the first connector plate into retained connection with the connector surface. The disclosure may seek to provide an arrangement for connecting a busbar to another busbar or an energy storage system in a way which is simple to arrange. The disclosure may seek to provide an arrangement which can compensate for positional variations of or movement of any of the involved parts. A technical benefit may include that the arrangement easily positions the first busbar into connection with the connector surface. This may come from the guiding slit easily guiding the first busbar to a position where it connects with the connector surface and where the pressing element keeps the first busbar in retained connection with the connector surface.

According to the invention, the guiding slit allows for the first connector plate to move axially, laterally and normally, to take up tolerances, in the guiding slit. A technical benefit may include allowing for movement of between the housing, the connector surface and the first busbar. The arrangement can thus be made more durable as movements don't wear on the arrangement. A technical benefit may include making it easier to connect the first busbar to the connector surface by allowing the busbar to easily move into and through the guiding slit.

The guiding slit is provided with a funnel shaped or ramped opening, to guide the first connector plate into the guiding slit. A technical benefit may include making it easier to connect the first busbar to the connector surface by guiding the busbar into the guiding slit.

Optionally in some examples, including in at least one preferred example, the pressing element is a spring with a spring force normally to the first connector plate and the connector surface. A technical benefit may include that a spring in a simple and predictable way can press the first busbar into retained connection with the connector surface. A technical benefit may include that the pressing force of a spring can be adjusted easily by compressing or releasing the spring.

According to the invention, the pressing element is a screw or bolt; wherein the first connector plate and the connector surface are provided with openings normally to the first connector plate and the connector surface, such that the screw or bolt may pass there through; wherein a push plate or nut is arranged on the screw or bolt on a first side of the first connector plate and connector surface, to press the first connector plate and the connector surface into retained connection. A technical benefit may include improving the retained connection between the first connector plate and the connector surface. A technical benefit may include that a screw or bolt with a push plate may press the first connector plate and the connector surface into retained connection in a manner which is easy arrange.

Furthermore the screw or bolt comprises an elongated head; wherein the housing comprises a helix shaped opening on a second side of the first connector plate and connector surface; wherein the second side is opposite to the first side; which helix shaped opening encloses the elongated head of the screw or bolt such that the elongated head may, by rotating, move through the helix shaped opening from a first end of the opening to a second, opposite, end of the opening; wherein the helix shaped opening comprises a locking socket at the second end of the opening, which locking socket is arranged to prevent the elongated head of the screw or bolt from moving towards the first end of the opening, the first end being closer to the connector surface than the second end. A technical benefit may include improving the retained connection between the first connector plate and the connector surface. This by preventing movement of the screw or bolt, thus keeping the first connector plate and the connector surface pressed into retained connection.

Optionally in some examples, including in at least one preferred example, the pressing element is configured to press the first connector plate into retained direct connection with the connector surface. A technical benefit may include that the electrical contact between the first busbar and the connector surface is improved. A technical benefit may include that the arrangement is made more compact as no intermediate connector is needed between the first busbar and the connector surface.

Optionally in some examples, including in at least one preferred example, the arrangement is adapted to allow movement of the connector surface in a normal direction to the first connector plate. A technical benefit may include that the arrangement is made more versatile. This since by being allowed to move the connector surface can compensate for different shapes and sizes of the first busbar.

Optionally in some examples, including in at least one preferred example, the arrangement comprises a spring configured to press the connector surface towards the first connector plate. A technical benefit may include making the retained connection more secure by pressing not only the first busbar towards the connector surface but also the connector surface towards the first busbar. A technical benefit may include that a spring can in a simple and predictable way press the connector surface into retained connection with the first busbar. A technical benefit may include that the pressing force of a spring can be adjusted easily by compressing or releasing the spring.

Optionally in some examples, including in at least one preferred example, the pressing element is adapted to press the first connector plate and the connector surface towards each other by over 100 N. A technical benefit may include improving the retained connection. This by counteracting any forces acting on the first connector plate or the connector surface from releasing the retained connection.

According to a second aspect of the invention, a system is provided. The system comprises the arrangement previously mentioned. The system further comprises the first busbar. The system further comprises the connector surface of the energy storage system or second busbar. A technical benefit may incude the benefits and advantages of the first aspect together with allowing for a connection between the first busbar and the connector surface.

Optionally in some examples, including in at least one preferred example, the first busbar is a high voltage busbar. The high voltage busbar extending along a central axis. The high voltage busbar comprising: a first connector plate at a first end zone along the central axis; a second connector plate at a second end zone along the central axis; and a central flexible region in between the first connector plate and the second connector plate. A technical benefit may include providing a busbar which may connect to another busbar or an energy storage system in a way which can compensate for positional variations of or movement of any of the involved parts. A technical benefit may include that the central opening allows for a simple and resilient connection to another busbar or an energy storage system. For example by fastening the busbar through the central opening to the another busbar or an energy storage system. A technical benefit may include that the flexible region allows for an adjustable positioning of the first and second connector plates. This may improve the versatility of the busbar.

Optionally in some examples, including in at least one preferred example, the electrical resistance of the retained connection between the first connector plate and the connector surface is below 1 milliohm, or below 0.1 milliohm, or below 0.01 milliohm or below 0.001 milliohm. A technical benefit may include that this electrical resistance is suitable for conducting electricity in a high voltage environment.

Optionally in some examples, including in at least one preferred example, the busbar is made of a metal material, such as copper, brass or aluminium. A technical benefit may include that the busbar will conduct electricity in an efficient way and be rigid and resistant to wear. Further, these metals can allow the central flexible region to be flexible.

Optionally in some examples, including in at least one preferred example, the central flexible region comprises a plurality of separate flexible layers. A technical benefit may include that the central region flexible region can be made in a simple manner and can be made flexible.

Optionally in some examples, including in at least one preferred example, the central flexible region is plastically deformable such that the first connector plate may be angled with regards to the second connector plate by 45 to 135 degrees. A technical benefit may include allowing the busbar to be easily reshaped such that it more easily can connect to another busbar or an energy storage system.

Optionally in some examples, including in at least one preferred example, the central flexible region is elastically deformable such that the first connector plate may be angled with regards to the second connector plate by 45 to 135 degrees. A technical benefit may include allowing the busbar to be easily reshaped such that it more easily can connect to another busbar or an energy storage system. This while allowing for movement between the first and second connector plates.

Optionally in some examples, including in at least one preferred example, the first connector plate and/or the second connector plate comprises a central opening. The central opening being configured to allow passage of a fastening element there through, such as a shank of a screw or a shank of a bolt. A technical benefit may include that the central opening allows for a simple and resilient connection to another busbar or an energy storage system. For example by fastening the busbar through the central opening to the another busbar or an energy storage system. A technical benefit may include that the busbar can easily be fastened to and thus form an electrical contact with another busbar or an energy storage system. A technical benefit may include that the flexible region allows for an adjustable positioning of the first and second connector plates while the central opening may secure the busbar to another busbar or an energy storage system.

Optionally in some examples, including in at least one preferred example, the thickness of the busbar is between 2 and 30 mm. A technical benefit may include that this thickness allows for a suitable resistance of the busbar. Another technical benefit may include that this thickness allows for the busbar to be robust enough to tolerate plastic or elastic deformation.

Optionally in some examples, including in at least one preferred example, the electrical resistance of the busbar is below 1 milliohm, or below 0.1 milliohm, or below 0.01 milliohm or below 0.001 milliohm. A technical benefit may include that this electrical resistance is suitable for conducting electricity in a high voltage environment.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1A** is an exemplary cross sectional side view of a high voltage busbar in an unbent state according to an example.
**FIG. 1B** is an exemplary cross sectional side view of the high voltage busbar of Fig. 1A in a bent state according to an example.
**FIG. 1C** is an exemplary cross sectional side view of a bent high voltage busbar according to an example.
**FIG. 1D** is an exemplary cross sectional top view of an unbent high voltage busbar according to an example.
**FIG. 2** is an exemplary cross sectional side view of an arrangement for connecting a first busbar to an energy storage system or a second busbar according to an example.
**FIG. 3** is an exemplary cross sectional bottom view of the arrangement of Fig. 2 according to an example.
**FIG. 4A** is an exemplary cross sectional side view of an arrangement for connecting a first busbar to an energy storage system or a second busbar according to the invention.
**FIG. 4B** is an exemplary cross sectional side view of the arrangement of Fig. 4A according to the invention.
**FIG. 5** is an exemplary cross sectional bottom view of the arrangement of Fig. 4A according to an example.

### DETAILED DESCRIPTION

The detailed description set forth below provides information and examples of the disclosed technology with sufficient detail to enable those skilled in the art to practice the disclosure.

Generally, a busbar is stiff and can not have its shape altered. Therefore a busbar is not suitable for connecting parts of which the positions aren't known from beforehand. Further, a stiff busbar does not compensate for movement of the parts connected by the busbar. Movement of any of the connected parts could break the electrical contact, the parts or the busbar. A high voltage busbar according to the disclosure may compensate for movement of the connected parts and may connect to parts whose positions aren't known from beforehand. This by having a central flexible region which can allow movement of the connector plates of the busbar relative each other while being securely connected by the central opening.

Arrangements for connecting busbars suffer from similar problems. Since the busbars are stiff they are not very easy to connect. An arrangement has to be in the right place and have the right dimensions to connect to a certain busbar. An arrangement for connecting a busbar according to the disclosure improves this. Such an arrangement is simple to arrange and can compensate for positional variations of the busbar and the part it is to connect to. Further, it can allow for some movement of the connected parts while maintaining the connection. This can be achieved by the guiding slit of the housing which guides a connector plate of the busbar into a position where a pressing element presses the connector plate into retained connection with a connector surface of another busbar or an energy storage system. The dimensions of the guiding slit may be larger than dimensions of the connector plate such that it allows for some axial, lateral and normal movement of the connector plate in the guiding slit while the pressing element maintains the retained connection.

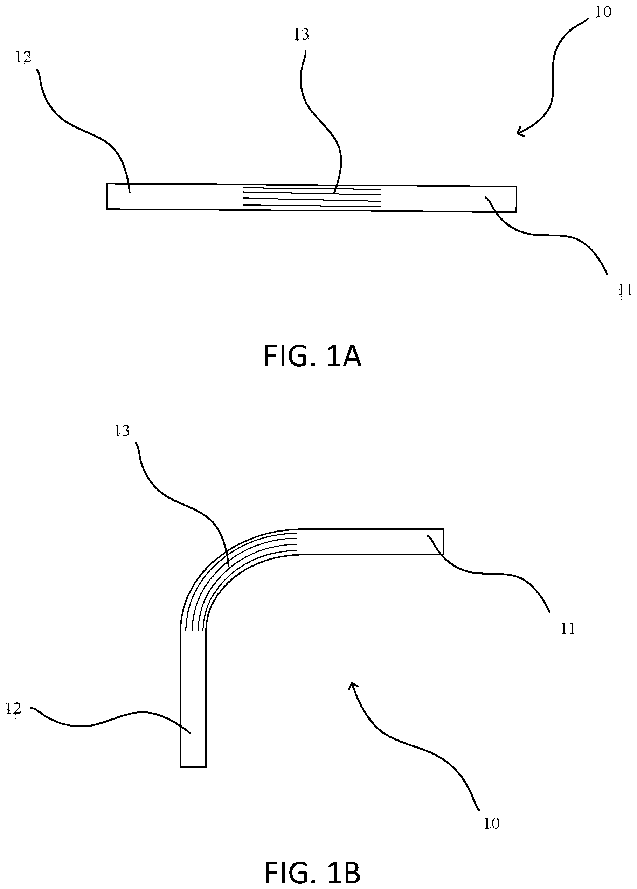

**FIG. 1A** is an exemplary cross sectional side view of a high voltage busbar 10 in an unbent state according to an example. The busbar 10 is in the form of a rectangular bar. The busbar 10 has a first connector plate 11 at a first end zone along a central axis and a second connector plate 12 at a second end zone of the central axis. The central axis extends in the longitudinal direction of the busbar 10. The central axis extends centrally in the busbar 10 along the longitudinal direction of the busbar 10. The busbar 10 has a central flexible region 13 between the first connector plate 11 and the second connector plate 12. The central flexible region 13 comprises a plurality of separate flexible layers. The plurality of flexible layers may join into the first connector plate 11 and the second connector plate 12. Each of the layers of the plurality of separate layers is flexible. The busbar 10 is made of a conductive metal. For example copper, aluminium or brass. The busbar 10 can be a plated metal. For example plated by nickel. The busbar 10 could be a nickel plated copper busbar. The busbar 10 can be surface treated such that the contact resistance of the busbar 10 is reduced. The busbar 10 can be surface treated such that the rate of oxidation of the surface of the busbar 10 is reduced. The busbar 10 can be surface treated such that both the contact resistance of the busbar 10 and the rate of oxidation of the surface of the busbar 10 are reduced. The thickness of the busbar 10 is between 2 and 30 mm. The thickness of the busbar 10 could be between 2 and 20 mm, or between 2 and 14 mm, or between 2 and 8 mm. The thickness of the busbar 10 could be between 10 and 30 mm, or between 10 and 20 mm, or between 20 and 30 mm.

**FIG. 1B** is an exemplary cross sectional side view of the same high voltage busbar 10 as in Figure 1A but here in a bent state. The central flexible region 13 has been deformed such that the first connector plate 11 and the second connector plate 12 are angled with regards to each other. The first connector plate 11 and the second connector plate 12 are angled with regards to each other by 90 degrees. The first connector plate 11 and the second connector plate 12 can be angled with regards to each other by between 45 and 135 degrees. The busbar 10 could be made such that the first connector plate 11 and the second connector plate 12 could be angled with regards to each other by between 60 and 120 degrees, or by between 75 and 105 degrees, or by between 85 and 95 degrees.

The busbar 10 can be made such that the central flexible region 13 is plastically deformable. The central flexible region 13 may then be stiff enough to maintain the angle between the first connector plate 11 and the second connector plate 12 while a force of up to 100 N is applied to either the first connector plate 11 or to the second connector plate 12. Alternatively the central flexible region 13 can be made stiff enough to maintain the angle between the first connector plate 11 and the second connector plate 12 while a force of up to 10 N, or up to 200 N, or up to 500 N, or up to 1000N, or up to 5 000 N, or up to 10 000 N is applied to either the first connector plate 11 or to the second connector plate 12. The force applied being a bending force, in other words a force in a direction normal to either the top side or bottom side of either connector plate 11, 12. The central flexible region 13 may be plastically deformable such that the first connector plate may be angled with regards to the second connector plate by between 45 and 145 degrees, or by between 60 and 120 degrees, or by between 75 and 105 degrees, or by between 85 and 95 degrees.

The busbar 10 can alternatively be made such that the central flexible region 13 is elastically deformable. This can be such that the busbar 10 returns to an unbent state when not subject to any bending forces. The central flexible region 13 may then be elastically deformable such that the first connector plate 11 may be angled with regards to the second connector plate 12 by between 45 and 145 degrees, or by between 60 and 120 degrees, or by between 75 and 105 degrees, or by between 85 and 95 degrees.

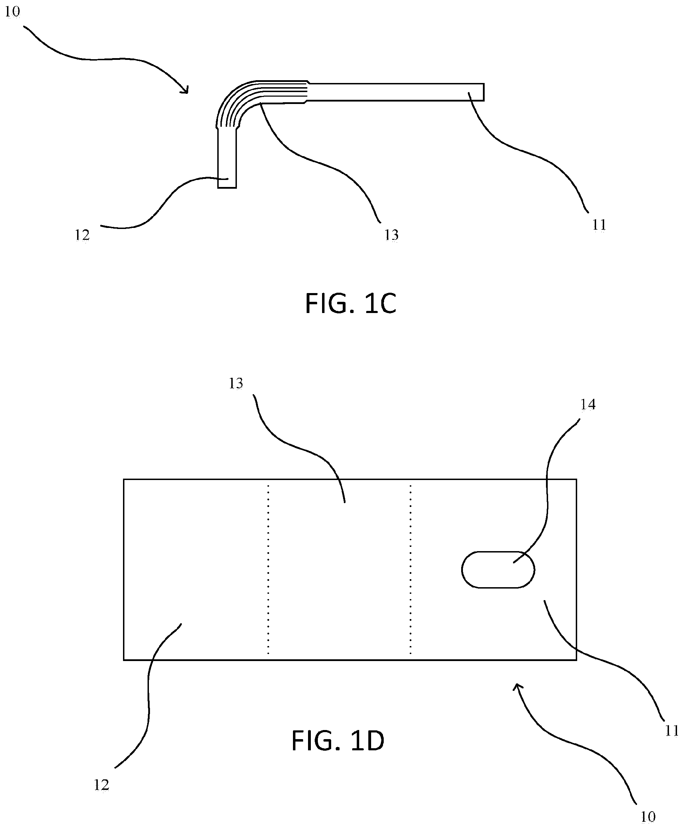

**FIG. 1C** is an exemplary cross sectional side view of a high voltage busbar 10 in a bent state according to an example. Here the busbar 10 is in the form of a rectangular bar where the central region 13 has a larger thickness than the first connector plate 11 and the second connector plate 12. Other than this the busbar 10 is similar to the busbars 10 described in relation to Figure 1A, 1B and 1D.

As seen in the busbars 10 shown in Figure 1A and 1B the length of the first connector plate 11 and the length of the second connector plate 12 may be equal. As seen in Figure 1C the length of the first connector plate 11 and length of the second connector plate 12 may be different from each other. The length being the extension in the longitudinal direction of the busbar 10.

**FIG. 1D** is an exemplary cross sectional top view of an unbent high voltage busbar 10 according to an example. The busbar 10 is similar to the busbars of Figure 1A, 1B or 1C. Like the other busbars 10, the busbar 10 of Figure 1D has a first connector plate 11 at a first end zone along the central axis, a second connector plate 12 at a second end zone of the central axis and a central flexible region 13 between the first connector plate 11 and the second connector plate 12. In Figure 1D it can be seen that the busbar 10 has a central opening 14. The busbars of Figure 1A, 1B and 1C may have a central opening as well but it is not visible in those figures. The central axis intersects the central opening 14. The central opening 14 is configured to allow passage of a fastening element there through. Such as a shank of a screw or a shank of a bolt. The central opening 14 is of an elongated form. Here the extension along the central axis is longer than the extension transverse to the central axis. The extension along the central axis could be shorter than the extension transverse to the central axis. The central opening 14 is in the form of a rectangle with rounded corners. The corners are rounded such that the short sides of the rectangle form a semicircle. Other shapes are possible, for example a rectangle without rounded corners or an elliptical rectangle. In Figure 1D the first connector plate 11 comprises the central opening 14. The second connector plate 12 may also or alternatively comprise a central opening 14.

As can be seen in Figure 1A-D the busbar 10 is shaped like a rectangular bar. The central flexible region 13 is separated from the first connector plate 11 along a plane to which plane the central axis is orthogonal. The central flexible region 13 is separated from the second connector plate 11 along another plane to which plane the central axis is orthogonal.

By the busbar being a high voltage busbar is meant that it is suitable for conducting electricity in high voltage environments. A high voltage may be a voltage between 30 to 1000 VAC or 60 to 1500 VDC. A high voltage may be a voltage above 400 VAC or above 400 VDC. A high voltage may be a voltage above 600 VAC or above 600 VDC. A high voltage may be a voltage between 400 and 1000 VAC or between 400 and 1500 VDC. A high voltage may be a voltage between 600 and 1000 VAC or 600 and 1500 VDC. The electrical resistance of the busbar is below 1 milliohm, or below 0.1 milliohm, or below 0.01 milliohm or below 0.001 milliohm.

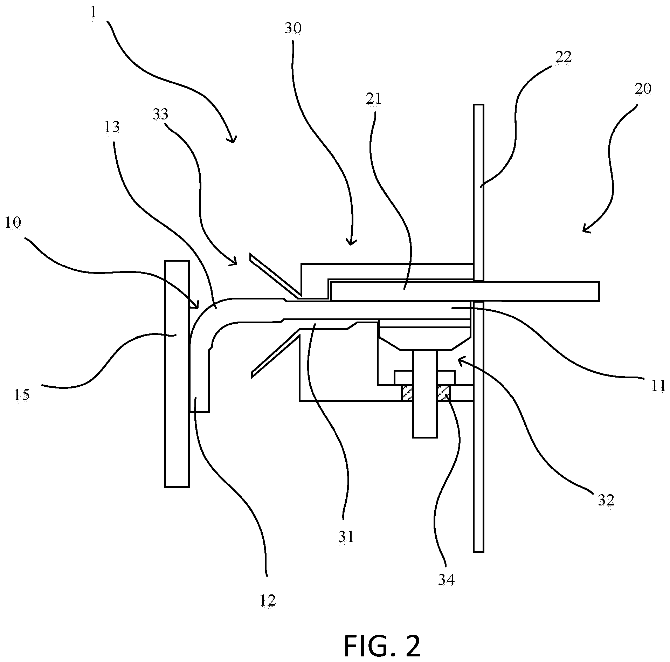

**FIG. 2** is an exemplary cross sectional side view of an arrangement 1 for connecting a first busbar 10 to an energy storage system 20 or a second busbar 20 according to an example. The arrangement 1 is part of a system at least together with the first busbar 10 and a connector surface 21 of the energy storage system 20 or second busbar 20.

The arrangement comprises a housing 30 which houses the busbar 10. The housing 30 is made of plastic. The housing 30 may be made from another material which does not conduct electricity. The housing 30 can also be made from a material which is conductive, such as a metal material. The housing 30 is arranged by a side wall 22 which houses the energy storage system 20 or second busbar 20. The energy storage system 20 or second busbar 20 comprises a connector surface 21 and extends through the side wall 22 into the housing 30 such that the housing 30 houses the connector surface 21. The connector surface 21 may for example be in the form of a busbar or of an electrically conducting metal plate. The connector surface 21 is made of a conductive metal. For example copper, aluminium or brass. The connector surface 21 can be made of a plated metal. For example plated by nickel. The connector surface 21 could be made of nickel plated copper. The connector surface 21 can be surface treated such that the contact resistance of the connector surface 21 is reduced. The connector surface 21 can be surface treated such that the rate of oxidation of the surface of the connector surface 21 is reduced. The connector surface 21 can be surface treated such that both the contact resistance of the connector surface 21 and the rate of oxidation of the surface of the connector surface 21 are reduced. The thickness of the connector surface 21 is between 2 and 30 mm. The thickness of the connector surface 21 could be between 2 and 20 mm, or between 2 and 14 mm, or between 2 and 8 mm. The thickness of the connector surface 21 could be between 10 and 30 mm, or between 10 and 20 mm, or between 20 and 30 mm.

The housing 30 comprises a guiding slit 31. The guiding slit 31 is arranged to house the first connector plate 11 and guide it into the housing 30. The guiding slit 31 is arranged to guide the first connector plate 11 along a plane parallel to the connector surface 21. The height and width of the guiding slit 31 are larger than the respective thickness and width of the first connector plate 11. This such that the guiding slit 31 allows for the first connector plate 11 to move laterally and normally in the guiding slit 31. Further, the depth of the guiding slit 31 is such that axial movement of the first connector plate 11 is allowed in the guiding slit 31.

The housing 30 comprises a funnel or ramped shaped opening 33. The funnel or ramped shaped opening 33 is arranged to guide the busbar 10 into the guiding slit 31. The funnel or ramped shaped opening 33 is narrower at an end closest to the guiding slit 31 than at an end farther away from the guiding slit 31.

The first busbar 10 comprises a first connector plate 11, a second connector plate 12 and a central flexible region 13 inbetween. The busbar 10 may be similar to the busbars 10 described in connection to Figure 1A-D. The busbar 10 is electrically connected to an electrical connection element 15 which may further be electrically connected to an electrical system or power line. The busbar 10 is connected to the electrical connection element 15 via the second connector plate 12. The flexible region 13 is deformed such that the busbar 10 is in a bent shape and the first connector plate is angled relative the second connector plate by 90 degrees.

As can be seen in Figure 2 the first connector plate 11 has been inserted into the guiding slit 31 such that it is housed by the housing 30. The first connector plate 11 has been inserted into the guiding slit 31 such that the first connector plate 11 is in direct contact with the connector surface 21 such that the first connector plate 11 and connector surface 21 are electrically connected. The electrical resistance of the connection between the first connector plate 11 and the connector surface 21 is below 1 milliohm, or below 0.1 milliohm, or below 0.01 milliohm or below 0.001 milliohm.

The arrangement 30 comprises a pressing element 32 which presses the first connector plate 11 towards the connector surface 21. The pressing element 32 presses the first connector plate 11 into retained connection with the connector surface 21. In Figure 2 the pressing element 32 is a spring with a spring force normally to the first connector plate 11 and the connector surface 21. The pressing element 32 further comprises a screw which is inserted into an opening 34 in the housing 30. The screw is threadedly fastened in the housing 30 such that the screw and thus the pressing element 32 can move in a direction towards and away from the first connector plate 11 and connector surface 21. The screw extends through an opening 34 in the outer casing of the housing 30. The screw protrudes out from the housing through this opening 34. Thus the pressing element 32 can be maneuvered from the outside of the housing 30.

By moving towards the first connector plate 11 and connector surface 21 the spring may come into contact with the first connector plate and press it into retained connection with the connector surface 21. The pressing element 32 may press the first connector plate 11 and the connector surface 21 towards each other by over 100 N. The pressing element 32 may press the first connector plate 11 and the connector surface 21 towards each other by over 500 N, or over 1 000 N, or over 5 000 N, or over 7 500 N, or over 10 000 N, or over 15 000 N.

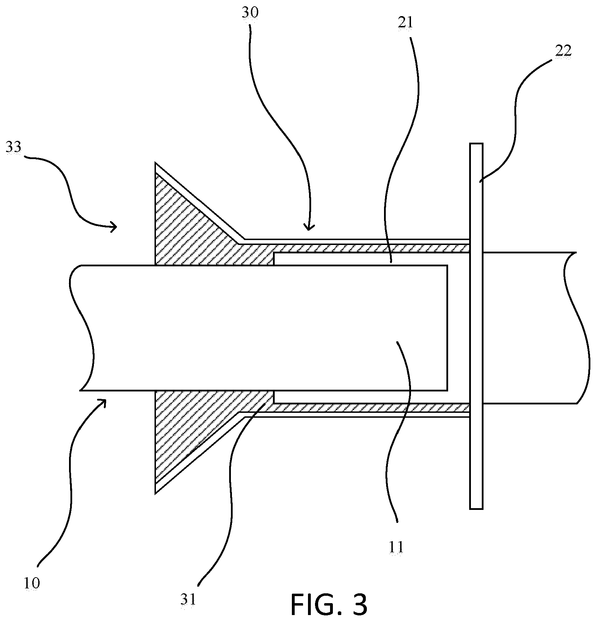

**FIG. 3** is an exemplary cross sectional bottom view of the arrangement of Figure 2 according to an example. Here it is further illustrated that the height and width of the guiding slit 31 are larger than the respective thickness and width of the first connector plate 11. This such that the guiding slit 31 allows for the first connector plate 11 to move laterally and normally in the guiding slit 31. In Figure 3 it is clearly seen that the width is larger and in Figure 2 it is clearly seen that the height is larger. In Figure 3 it is also clearly seen that the funnel or ramped shaped opening 33 is narrower at an end closest to the guiding slit 31 and broader at an end farther away from the guiding slit 31.

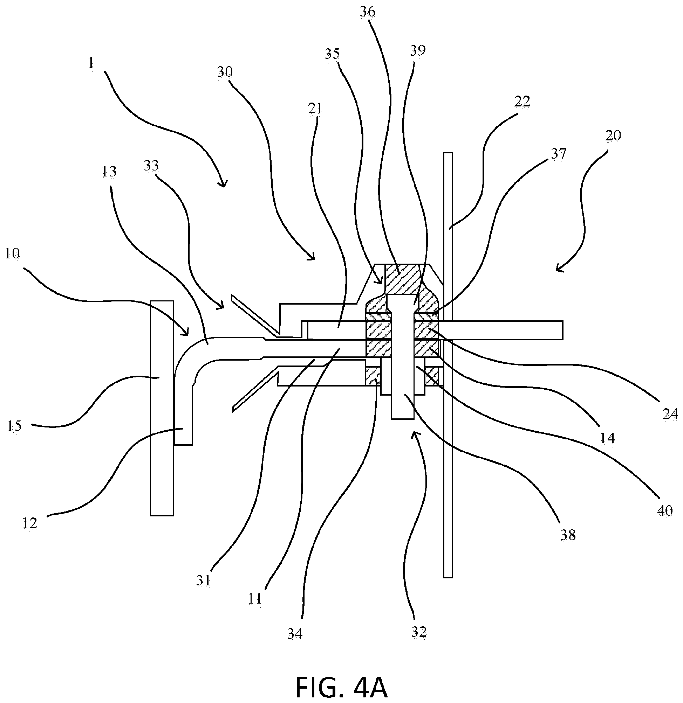

**FIG. 4A** is an exemplary cross sectional side view of an arrangement 1 for connecting a first busbar 10 to an energy storage system 20 or a second busbar 20 according to an example. The arrangement 1 is similar to the arrangement 1 shown in Figure 2 and 3 but here the pressing element 32 and the housing 30 are different. In Figure 4A the pressing element is a screw or a bolt 38. The screw or bolt 38 comprises an elongated head 39. The elongated head 39 of the screw or bolt is elongated. The elongated head 39 of the screw or bolt is elongated in a direction transverse to the longitudinal extension of the screw or bolt 38. Also here the arrangement 1 is part of a system at least together with the first busbar 10 and the connector surface 21 of the energy storage system 20 or second busbar 20.

The first connector plate 11 comprises an opening 14. The opening 14 may be elongated. The opening 14 may be similar to the central opening described in connection to the busbar 10 shown in Figure 1D. The opening 14 extends through the first connector plate 11 from the bottom side to the top side. The connector surface 21 comprises an opening 24. The opening 24 may be elongated. The opening 24 extends through the connector surface 21 from the bottom side to the top side. The housing 30 comprises an opening 34 which extends through its outer casing from the outside of the outer casing to inside of the outer casing. The opening 34 may be elongated. The openings are each such that a fastening element 32, for example the screw or bolt 38, may pass there through. The opening 24 of the connector surface 21 is elongated such that the elongated head 39 of the screw or bolt may only pass there through when aligning the elongations of the elongated head 39 and the opening 24.

A push plate or nut 40 is arranged on the screw or bolt 38 on a first side of the first connector plate 11 and connector surface 21. The push plate or nut 40 is arranged on the screw or bolt 38 to press the first connector plate 11 and the connector surface 21 into retained connection. The push plate or nut 40 is arranged on the screw or bolt on the opposite side of the first connector plate 11 and connector surface 21 from the elongated head 39 of the screw or bolt. The push plate or nut 40 thus press the first connector plate 11 and the connector surface 21 into retained connection between itself and the elongated head 39 of the screw or bolt. The push plate or nut 40 can together with the screw or bolt 38 be seen as the pressing element.

The housing 30 comprises a helix shaped opening 35 on a second side of the first connector plate 11 and connector surface 21. The second side being opposite to the first side. The helix shaped opening 35 encloses the elongated head 39 of the screw or bolt such that the elongated head 39 may, by rotating, move through the helix shaped opening 35 from a first end of the opening to a second, opposite, end of the opening 35. The first end of the opening 35 being closer to the connector surface 21 than the second end of the opening 35 is. The rotation meant here is a rotation around the longitudinal axis of the screw or bolt 38.

The helix shaped opening 35 comprises a locking socket 36 at the second end of the helix shaped opening 35. The helix shaped opening 35 is arranged such that the elongated head 39 of the screw or bolt may move into the locking socket 36. The locking socket 36 is arranged to prevent the screw or bolt 38 from moving towards the first end of the opening. In other words it is the elongated head 39 of the screw or bolt 38 which is prevented to move towards the first end of the opening. Or in other words towards the connector surface 11. Or in other words through the opening 24 of the connector surface 21. The locking socket 36 prevents the screw from moving in this direction by locking the elongated head 39 of the screw or bolt by a locking shelf 37 of the locking socket 35. In Figure 4A it can be seen that the elongated head 39 of the screw or bolt is in contact with the locking shelf 37. The locking shelf 37 protrudes out from the helix shaped opening 35 in a plane parallel to the connector surface 21. The locking shelf 37 is arranged at the first end of the opening. The locking shelf 37 is arranged to be positioned between the connector surface 21 and the elongated head 39 of the screw or bolt which has been moved into the locking socket 36. The locking shelf 37 locks the screw or bolt 38 by preventing movement of the elongated head 39 of the screw or bolt towards the connector surface 21. This by being arranged between the elongated head 39 and the connector surface 21. The connector surface 21 is thus not in direct contact with the elongated head 39 of the screw or bolt. The first connector plate 11 and the connector surface 21 may thus be said to be pressed into retained connection between the push plate or nut 40, the housing and the elongated head 39 of the screw or bolt.

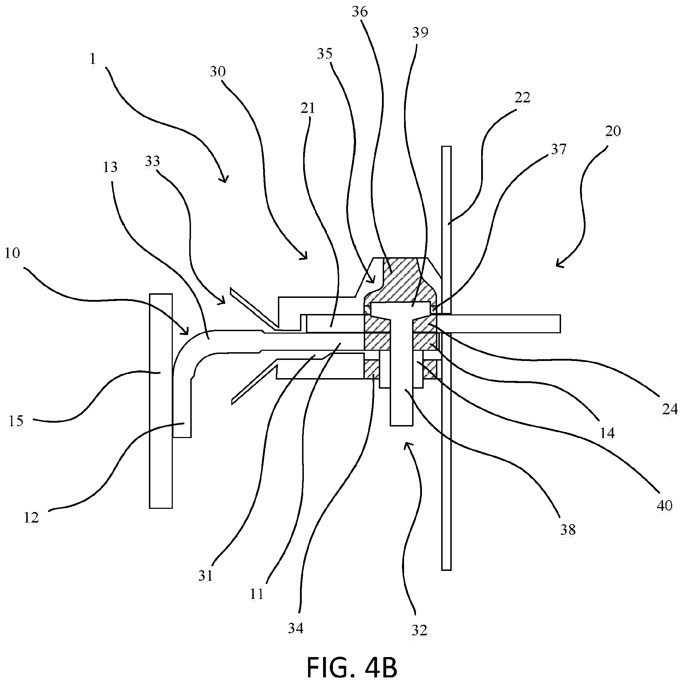

**FIG. 4B** is an exemplary cross sectional side view of the same arrangement of Figure 4A according to an example. Here the screw or bolt 38 has not yet been moved into the locking socket 36. The screw or bolt is rotated by about 90 degrees with regards to the screw or bolt 38 in Figure 4A. The screw or bolt 38 shall be rotated such that the elongated head 39 of the screw or bolt is aligned with each of the respective openings 14, 24, 34 of the housing 30, the first connector plate 11 and the connector surface 21 when passing through each opening 14, 24, 34. As can be seen in Figure 4B the elongated head 39 can't pass through the helix shaped opening into the locking socket when the screw or bolt 38 is rotated as in Figure 4B. By rotating the screw or bolt 38 around its elongated axis, the elongated head 39 is rotated such that it can enter the locking socket 36 and be prevented from moving towards the first end of the helix shaped opening 35.

The helix shaped opening 35 may be shaped in other ways. As long as the locking socket 36 and its function is comprised by the opening 35. The opening may for example be in the form of an open hemisphere with a locking shelf.

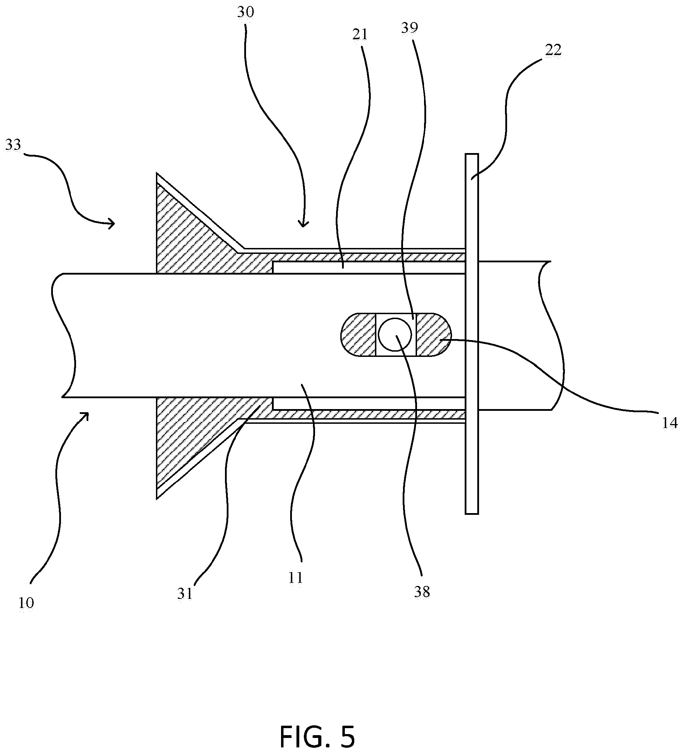

**FIG. 5** is an exemplary cross sectional bottom view of the arrangement of Figure 4A according to an example. Here it can be seen that the central opening 14 of the first connector plate 11 is elongated. The elongation is such that the extension of the central opening 14 in the longitudinal direction of the first connector plate 11 is longer than the extension in the transverse direction of the first connector plate 11. In other words the extension of the central opening 14 along the central axis of the first connector plate is longer than the extension transverse to the central axis. In Figure 5 it can be seen that the elongated head 39 of the screw or bolt 38 is prevented from passing through the central opening 14 of the first connector plate. Although not visible here the opening 24 through the connector surface 21 may be similar to the central opening 14 of the first connector plate 11. The elongated head 39 of the screw or bolt 38 may thus be prevented from passing through the opening 24 of the connector surface 21 as well. By being similar is not necessarily meant that they have equal shapes, but rather that the same function is achieved relating to the screw or bolt 38 and the elongated head 39 of the screw or bolt. The elongated head 39 is prevented from moving through the openings 14, 24 by having a rotational direction around the longitudinal axis of the screw or bolt 38 such that an extension of the elongated screw head 39 in a certain direction exceeds the extension of the openings 14, 24 in the same direction. It can be seen that the dimensions of the cross section of the shank of the screw or bolt 38 are smaller than the central opening 14 of the first connector plate. Thus the first connector plate 11 is free to move around the shank of the screw or bolt 38.

The housing 30 may house the connector surface 21 such that the connector surface 21 can move in a direction normal to the first connector plate 11. This is visible in Figure 2 although not shown in Figure 4A and 4B. Further, although not shown in any of the figures, the connector surface 21 may be pressed towards the first connector plate 11. For example by a spring or a spring washer. The spring could be arranged in the housing 30 on a side of the connector surface 21 opposite to the first connector plate 11. The spring washer could be arranged on the screw or bolt 38. The spring or spring washer may press the first connector plate 11 and the connector surface 21 towards each other by over 100 N. The spring or spring washer may press the first connector plate 11 and the connector surface 21 towards each other by over 200 N, or over 500 N, or over 1 000 N, or over 5 000 N, or over 7 500 N, or over 10 000 N, or over 15 000 N.

## Claims

1. An arrangement (1) for connecting a first busbar (10) to an energy storage system or a second busbar (20),
wherein the arrangement (1) comprises a housing (30) and a pressing element (32), and is configured such that a first connector plate (11) of the first busbar (10) is connectable to
a connector surface (21) of the energy storage system or second busbar (20);
wherein the housing (30) is arranged to house the connector surface (21) and comprises a guiding slit (31) for guiding the first connector plate (11) along a plane parallel to the connector surface (21);
wherein the pressing element (32) is configured to press the first connector plate (11) into retained connection with the connector surface (21), and wherein the guiding slit (31) is provided with a funnel shaped or ramped opening (33), to guide the first connector plate (11) into the guiding slit (31),
**characterized in that:**
the pressing element (32) is a screw or a bolt (38) configured to pass through openings (14, 24) provided in and normally aligned with the first connector plate (11) and the connector surface (21), wherein a nut (40) is arranged on the screw or bolt (38) on a first side of the first connector plate (11) and connector surface (21), to press the first connector plate (11) and the connector surface (21) into retained connection, and **in that** the screw or bolt (38) comprises an elongated head (39);
wherein the housing (30) comprises a helix shaped opening (35) on a second side of the first connector plate (11) and connector surface (21), the second side being opposite to the first side;
wherein the helix shaped opening (35) encloses the elongated head (39) of the screw or bolt (38) such that the elongated head (39) may, by rotating, move through the helix shaped opening (35) from a first end of the opening to a second, opposite, end of the opening;
wherein the helix shaped opening (35) comprises a locking socket (36) at the second end of the opening, which locking socket (36) is arranged to prevent the elongated head (39) of the screw or bolt (38) from moving towards the first end of the opening, the first end being closer to the connector surface (21) than the second end.

2. The arrangement (1) of claim 1, wherein the pressing element (32) is configured to press the first connector plate (11) into retained direct connection with the connector surface (21).

3. The arrangement (1) of any of claims 1-2, , wherein the arrangement is adapted to allow movement of the connector surface (21) in a normal direction to the first connector plate (11).

4. The arrangement (1) of claim 3, wherein the arrangement comprises a spring configured to press the connector surface (21) towards the first connector plate (11).

5. A system comprising the arrangement (1) of any of claims 1-4, the first busbar (10); and the connector surface (21) of the energy storage system or second busbar (20).

6. The system of claim 5,
wherein the first busbar (10) is a high voltage busbar
extending along a central axis, the high voltage busbar comprising:
a first connector plate (11) at a first end zone along the central axis;
a second connector plate (12) at a second end zone along the central axis; and
a central flexible region (13) in between the first connector plate and the second connector plate,
wherein the guiding slit (31) allows for the first connector plate (11) to move axially, laterally and normally, to take up tolerances, in the guiding slit (31).

7. The system of claim 6, wherein the central flexible region (13) comprises a plurality of separate flexible layers.

8. The system of any of claims 6 or 7, wherein the central flexible (13) region is plastically or elastically deformable such that the first connector plate (11) may be angled with regards to the second connector plate (12) by 45 to 135 degrees.

9. The system of any of claims 5 to 8, wherein the first connector plate (11) and/or the
second connector plate (12) comprises a central opening (14), such that the central axis intersects the central opening; and
wherein the central opening (14) is configured to allow passage of a fastening element (32) there through, such as a shank of a screw (38) or a shank of a bolt (38).

## Patentansprüche

1. Eine Anordnung (1) zum Verbinden einer ersten Stromschiene (10) mit einem Energiespeichersystem oder einer zweiten Stromschiene (20),
wobei die Anordnung (1) ein Gehäuse (30) und ein Andrückelement (32) umfasst und so konfiguriert ist, dass eine erste Anschlussplatte (11) der ersten Stromschiene (10) verbindbar ist mit einer Anschlussfläche (21) des Energiespeichersystems oder der zweiten Stromschiene (20);
wobei das Gehäuse (30) dazu eingerichtet ist, die Anschlussfläche (21) aufzunehmen, und einen Führungsschlitz (31) zum Führen der ersten Anschlussplatte (11) entlang einer Ebene parallel zur Anschlussfläche (21) umfasst;
wobei das Andrückelement (32) dazu konfiguriert ist, die erste Anschlussplatte (11) in eine gehaltene Verbindung mit der Anschlussfläche (21) zu drücken, und
wobei der Führungsschlitz (31) mit einer trichterförmigen oder rampenförmigen Öffnung (33) versehen ist, um die erste Anschlussplatte (11) in den Führungsschlitz (31) zu führen,
**dadurch gekennzeichnet, dass:**
das Andrückelement (32) eine Schraube oder ein Bolzen (38) ist, die bzw. der dazu konfiguriert ist, durch Öffnungen (14, 24) hindurchzugehen, die in der ersten Anschlussplatte (11) und der Anschlussfläche (21) vorgesehen und normalerweise miteinander fluchtend angeordnet sind,
wobei eine Mutter (40) an der Schraube oder dem Bolzen (38) auf einer ersten Seite der ersten Anschlussplatte (11) und der Anschlussfläche (21) angeordnet ist, um die erste Anschlussplatte (11) und die Anschlussfläche (21) in eine gehaltene Verbindung zu drücken, und dadurch, dass die Schraube oder der Bolzen (38) einen länglichen Kopf (39) umfasst; wobei das Gehäuse (30) eine wendelförmige Öffnung (35) auf einer zweiten Seite der ersten Anschlussplatte (11) und der Anschlussfläche (21) umfasst,
wobei die zweite Seite der ersten Seite gegenüberliegt;
wobei die wendelförmige Öffnung (35) den länglichen Kopf (39) der Schraube oder des Bolzens (38) so umschließt, dass sich der längliche Kopf (39) durch Drehen durch die wendelförmige Öffnung (35) von einem ersten Ende der Öffnung zu einem zweiten, gegenüberliegenden, Ende der Öffnung bewegen kann;
wobei die wendelförmige Öffnung (35) eine Verriegelungsaufnahme (36) am zweiten Ende der Öffnung umfasst, wobei die Verriegelungsaufnahme (36) dazu eingerichtet ist, zu verhindern, dass sich der längliche Kopf (39) der Schraube oder des Bolzens (38) in Richtung des ersten Endes der Öffnung bewegt, wobei das erste Ende näher an der Anschlussfläche (21) liegt als das zweite Ende.

2. Die Anordnung (1) nach Patentanspruch 1, wobei das Andrückelement (32) dazu eingerichtet ist, die erste Anschlussplatte (11) in eine aufrechterhaltene direkte Verbindung mit der Anschlussfläche (21) zu drücken.

3. Die Anordnung (1) nach einem der Patentansprüche 1-2, wobei die Anordnung dazu ausgelegt ist, eine Bewegung der Anschlussfläche (21) in einer Normalrichtung zu der ersten Anschlussplatte (11) zu ermöglichen.

4. Die Anordnung (1) nach Patentanspruch 3, wobei die Anordnung eine Feder umfasst, die dazu eingerichtet ist, die Anschlussfläche (21) gegen die erste Anschlussplatte (11) zu drücken.

5. Ein System, umfassend die Anordnung (1) nach einem der Patentansprüche 1-4,
die erste Stromschiene (10); und
die Anschlussfläche (21) des Energiespeichersystems
oder der zweiten Stromschiene (20).

6. Das System nach Patentanspruch 5, wobei die erste Stromschiene (10) eine Hochspannungsstromschiene ist, die sich entlang einer Mittelachse erstreckt, wobei die Hochspannungsstromschiene Folgendes umfasst:
eine erste Anschlussplatte (11) in einem ersten Endbereich entlang der Mittelachse;
eine zweite Anschlussplatte (12) in einem zweiten Endbereich entlang der Mittelachse; und einen zentralen flexiblen Bereich (13) zwischen der ersten Anschlussplatte und der zweiten Anschlussplatte,
wobei der Führungsschlitz (31) es der ersten Anschlussplatte (11) ermöglicht, sich axial, lateral und in Normalrichtung, um Toleranzen auszugleichen, in dem Führungsschlitz (31) zu bewegen.

7. Das System nach Patentanspruch 6,
wobei der zentrale flexible Bereich (13) eine Vielzahl separater flexibler Schichten umfasst.

8. Das System nach einem der Patentansprüche 6 oder 7,
wobei der zentrale flexible (13) Bereich plastisch oder elastisch verformbar ist, derart, dass die erste Anschlussplatte (11) in Bezug auf die zweite Anschlussplatte (12) um 45 bis 135 Grad angewinkelt werden kann.

9. Das System nach einem der Patentansprüche 5 bis 8,
wobei die erste Anschlussplatte (11) und/oder die zweite Anschlussplatte (12) eine zentrale Öffnung (14) umfasst, derart, dass die Mittelachse die zentrale Öffnung schneidet; und
wobei die zentrale Öffnung (14) dazu ausgebildet ist, den Durchtritt eines Befestigungselements (32) durch diese hindurch zu ermöglichen, wie etwa eines Schafts einer Schraube (38) oder eines Schafts eines Bolzens (38).

## Revendications

1. Un agencement (1) pour connecter une première barre omnibus (10) à un système de stockage d'énergie ou à une deuxième barre omnibus (20),
dans lequel l'agencement (1) comprend un boîtier (30) et un élément de pression (32), et est configuré de telle sorte qu'une première plaque de connexion (11) de la première barre omnibus (10) puisse être connectée à
une surface de connexion (21) du système de stockage d'énergie ou de la deuxième barre omnibus (20) ;
dans lequel le boîtier (30) est agencé pour loger la surface de connexion (21) et comprend une fente de guidage (31) pour guider la première plaque de connexion (11) le long d'un plan parallèle à la surface de connexion (21) ;
dans lequel l'élément de pression (32) est configuré pour presser la première plaque de connexion (11) en connexion maintenue avec la surface de connexion (21), et
dans lequel la fente de guidage (31) est pourvue d'une ouverture en forme d'entonnoir ou en pente (33), pour guider la première plaque de connexion(11) dans la fente de guidage (31),
**caractérisé en ce que :**
l'élément de pression (32) est une vis ou un boulon (38) configuré pour passer à travers des ouvertures (14, 24) prévues dans la première plaque de connexion (11) et la surface de connexion (21) et normalement alignées avec celles-ci,
dans lequel un écrou (40) est disposé sur la vis ou le boulon (38) sur un premier côté de la première plaque de connexion (11) et de la surface de connexion (21), pour presser la première plaque de connexion (11) et la surface de connexion (21) en connexion maintenue, et **en ce que** la vis ou le boulon (38) comprend une tête allongée (39) ;
dans lequel le boîtier (30) comprend une ouverture hélicoïdale (35) sur un deuxième côté de la première plaque de connexion (11) et de la surface de connexion (21),
le deuxième côté étant opposé au premier côté ;
dans lequel l'ouverture hélicoïdale (35) entoure la tête allongée (39) de la vis ou du boulon (38) de telle sorte que la tête allongée (39) puisse, par rotation, se déplacer à travers l'ouverture hélicoïdale (35) d'une première extrémité de l'ouverture à une deuxième extrémité, opposée, de l'ouverture ;
dans lequel l'ouverture hélicoïdale (35) comprend un logement de verrouillage (36) à la deuxième extrémité de l'ouverture, lequel logement de verrouillage (36) est agencé pour empêcher la tête allongée (39) de la vis ou du boulon (38) de se déplacer vers la première extrémité de l'ouverture, la première extrémité étant plus proche de la surface de connexion (21) que la deuxième extrémité.

2. L'agencement (1) de la revendication 1, dans lequel l'élément de pression (32) est configuré pour presser la première plaque de connexion (11) en connexion directe maintenue avec la surface de connexion (21).

3. L'agencement (1) de l'une quelconque des revendications 1-2, dans lequel l'agencement est adapté pour permettre le déplacement de la surface de connexion (21) dans une direction normale à la première plaque de connexion (11).

4. L'agencement (1) de la revendication 3, dans lequel l'agencement comprend un ressort configuré pour presser la surface de connexion (21) vers la première plaque de connexion (11).

5. Un système comprenant l'agencement (1) de l'une quelconque des revendications 1-4,
la première barre omnibus (10) ; et
la surface de connexion (21) du système de stockage d'énergie ou de la deuxième barre omnibus (20).

6. Le système de la revendication 5, dans lequel la première barre omnibus (10) est une barre omnibus à haute tension s'étendant le long d'un axe central, la barre omnibus à haute tension comprenant :
une première plaque de connexion (11) au niveau d'une première zone d'extrémité le long de l'axe central ;
une deuxième plaque de connexion (12) au niveau d'une deuxième zone d'extrémité le long de l'axe central ; et
une région flexible centrale (13) entre la première plaque de connexion et la deuxième plaque de connexion,
dans lequel la fente de guidage (31) permet à la première plaque de connexion (11) de se déplacer axialement, latéralement et normalement, pour compenser les tolérances, dans la fente de guidage (31).

7. Le système de la revendication 6,
dans lequel la région flexible centrale (13) comprend une pluralité de couches flexibles séparées.

8. Le système de l'une quelconque des revendications 6 ou 7,
dans lequel la région flexible (13) centrale est plastiquement ou élastiquement déformable de telle sorte que la première plaque de connexion (11) puisse être inclinée par rapport à la deuxième plaque de connexion (12) de 45 à 135 degrés.

9. Le système de l'une quelconque des revendications 5 à 8,
dans lequel la première plaque de connexion (11) et/ou la deuxième plaque de connexion (12) comprend une ouverture centrale (14), de telle sorte que l'axe central coupe l'ouverture centrale ; et
dans lequel l'ouverture centrale (14) est configurée pour permettre le passage d'un élément de fixation (32) à travers celle-ci, tel qu'une tige d'une vis (38) ou une tige d'un boulon (38).
